# EUROPEAN PATENT SPECIFICATION

(11) **EP 2 784 592 B1**
(45) Date of publication and mention of the grant of the patent: **16.06.2021**
(21) Application number: 14161709.2
(22) Date of filing: 26.03.2014
(51) Int. Cl.: G03G 15/00

(54) **Image forming apparatus, image forming method, and image forming program**
Bilderzeugungssystem, Bilderzeugungsverfahren und Bilderzeugungsprogramm
Appareil, procédé et programme de formation d'images

(30) Priority: 29.03.2013 JP 2013071854
(43) Date of publication of application: 01.10.2014
(73) Proprietor: Kyocera Document Solutions Inc., Osaka-shi, Osaka 540-8585 (JP)
(72) Inventor: Umezawa, Hideo, Osaka-shi Osaka 540-8585 (JP)
(74) Representative: BRP Renaud & Partner mbB Rechtsanwälte Patentanwälte Steuerberater

(56) References cited:
- JP-A- H10 198 538
- JP-A- 2005 250 783
- US-A1- 2011 063 664
- US-A1- 2012 050 803

## Description

### BACKGROUND

### Technical Field

The present disclosure relates to an image forming apparatus configured to output images under different print settings, an image forming method for outputting images under different print settings, and an image forming program for outputting images under different print settings.

### Related Art

Some of existing image forming apparatuses, such as a copier and a multifunctional peripheral (MFP), are configured to accept various print settings including duplex printing, monochromization of a colored source document, and page aggregate printing for printing a plurality of pages on a single recording sheet. Such an image forming apparatus enables, for example in the case of distributing a meeting material to a plurality of participants, the material to be printed for all the participants under the same print setting.

However, there may be cases where some of the participants can accept aggregate printing such as 2-in-1 or 4-in-1, or monochrome printing of a colored source document.

To meet the needs of such participants, an image forming apparatus has been developed that is capable of printing images under a customized setting made by each of the participants, on the basis of information indicating the setting of each of the participants. Relevant prior art documents are US 2012/050803, JP 2005 250783, JP H10 198538 and US 2011/063664.

### SUMMARY

In some aspects, the disclosure proposes further improvement of the foregoing technique. The invention is defined by the appended claims.

In an aspect, the disclosure provides an image forming apparatus including a user print setting storage unit (9), a page setting information acquisition unit (811), a print setting decision unit (812), a print setting unit (813), and an image forming unit (7).

The user print setting storage unit (9) stores therein a print setting made by each of one or more users, as a user print setting.

The page setting information acquisition unit (811) acquires, with respect to each of one or more pages of print data, page setting information indicating whether the user print setting is permissible.

The print setting decision unit (812) decides, with respect to each of the one or more pages, whether the user print setting stored in the user print setting storage unit (9) is permitted according to the page setting information acquired by the page setting information acquisition unit (811).

The print setting unit (813) applies the user print setting to the page for which the user print setting is permitted according to the page setting information, among the one or more pages with respect to which the decision on the user print setting has been made by the print setting decision unit (812), and applies a print setting of the print data to the page for which the user print setting is not permitted.

The image forming unit (7) outputs the print data for each of the one or more users according to the print setting applied by the print setting unit (813).

In another aspect, the disclosure provides an image forming method including storing a user print setting, acquiring page setting information (S101), deciding permission of the print setting (S105), applying the print setting (S106, S107, S108), and forming an image (S110).

The storing of a user print setting includes storing a print setting made by each of one or more users in a storage unit, as a user print setting.

The acquiring of page setting information (S101) includes acquiring, with respect to each of one or more pages of print data, page setting information indicating whether the user print setting is permissible.

The deciding of permission of the print setting (S105) includes deciding, with respect to each of the one or more pages, whether the user print setting stored in the storage unit is permitted according to the page setting information acquired in the acquiring of the page setting information (S101).

The applying of the print setting (S106, S107, S108) includes applying the user print setting to the page for which the user print setting is permitted according to the page setting information, among the one or more pages with respect to which the decision on the user print setting has been made, and applying a print setting of the print data to the page for which the user print setting is not permitted.

The forming of an image (S110) includes causing an image forming unit (7) to output the print data for each of the one or more users according to the print setting applied.

In still another aspect, the disclosure provides an image forming program for causing a computer to perform as a user print setting memory control unit (816), a page setting information acquisition unit (811), a print setting decision unit (812), a print setting unit (813), and an image formation control unit (817).

The user print setting memory control unit (816) stores a print setting made by each of one or more users in a storage unit (9), as a user print setting.

The page setting information acquisition unit (811) acquires, with respect to each of one or more pages of print data, page setting information indicating whether the user print setting is permissible.

The print setting decision unit (812) decides, with respect to each of the one or more pages, whether the user print setting stored in the user print setting storage unit (9) is permitted according to the page setting information acquired by the page setting information acquisition unit (811).

The print setting unit (813) applies the user print setting to the page for which the user print setting is permitted according to the page setting information, among the one or more pages with respect to which the decision on the user print setting has been made by the print setting decision unit (812), and applies a print setting of the print data to the page for which the user print setting is not permitted.

The image formation control unit (817) causes an image forming unit (7) to output the print data for each of the one or more users according to the print setting applied by the print setting unit (813).

### BRIEF DESCRIPTION OF THE DRAWINGS

Fig. 1 is a schematic cross-sectional view showing an internal structure of an image forming apparatus according to an embodiment of the disclosure;
Fig. 2 is a block diagram showing a control system of the image forming apparatus according to the embodiment;
Fig. 3 is a flowchart showing a distribution material output process performed by the image forming apparatus according to the embodiment; and
Fig. 4 is a schematic drawing for explaining a page setting process by the image forming apparatus according to the embodiment.

### DETAILED DESCRIPTION

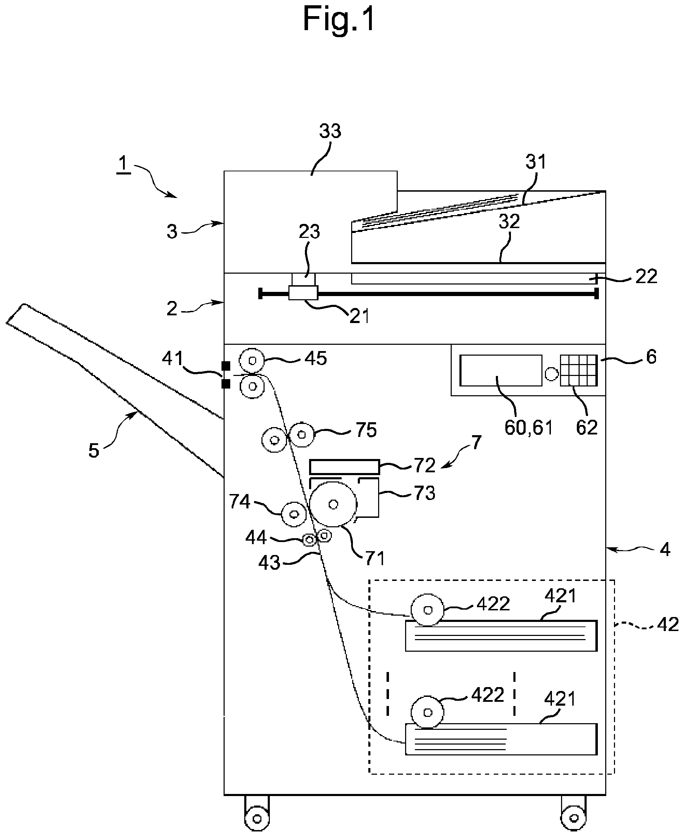

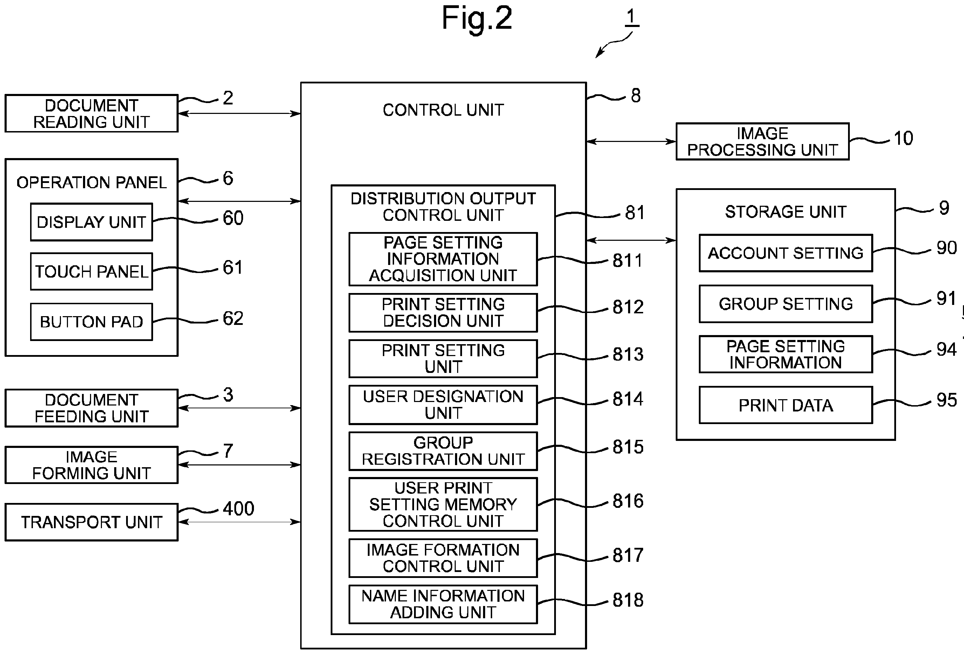

Referring to Figs. 1 and 2, a configuration of an image forming apparatus 1 according to an embodiment of the disclosure will be described in details.

### Configuration of Image Forming Apparatus

As shown in Fig. 1, the image forming apparatus 1 according to this embodiment includes a document reading unit 2, a document feeding unit 3, a main unit 4, a stack tray 5, and an operation panel 6.

The document reading unit 2 is placed on top of the main unit 4, and the document feeding unit 3 is placed on top of the document reading unit 2. The stack tray 5 is provided on a side face of the main unit 4 in which a sheet outlet 41 for recording sheets is located, and the operation panel 6 is located on the front side of the image forming apparatus 1.

The document reading unit 2 includes a scanner 21, a platen glass 22, and a document reading slit 23. The scanner 21 includes an exposure lamp and an image sensor including a charge coupled device (CCD), a complementary metal oxide semiconductor (CMOS), or the like, and is movable in a direction in which a source document is transported by the document feeding unit 3. The platen glass 22 serves as a source document table formed of a transparent material such as glass. The document reading slit 23 extends in a direction orthogonal to the direction in which the source document is transported by the document feeding unit 3.

The document reading unit 2 is configured to automatically recognize the size of the source document one by one, for example in a range from card size to A3 size, and read (scan) an image in a predetermined range corresponding to the recognized size.

To read the source document placed on the platen glass 22, the scanner 21 is moved to a position opposite the platen glass 22, and acquires image data by scanning the source document placed on the platen glass 22 and outputs the acquired image data to the main unit 4.

To read the source document delivered from the document feeding unit 3, the scanner 21 is moved to a position opposite the document reading slit 23, and acquires image data by scanning the source document through the document reading slit 23 in synchronization with the document feeding operation of the document feeding unit 3 and outputs the acquired image data to the main unit 4.

The document feeding unit 3 includes a document loading region 31, a document discharge region 32, and a document transport mechanism 33. The source documents placed on the document loading region 31 are picked up one by one by the document transport mechanism 33 and delivered to the position opposite the document reading slit 23, and then discharged to the document discharge region 32. Here, the document feeding unit 3 may be configured as a flip-up type, so as to also serve as a platen cover that can be lifted up to expose the upper face of the platen glass 22.

The main unit 4 includes an image forming unit 7, a paper feed unit 42, a sheet transport path 43, a transport roller 44, and a discharge roller 45. The paper feed unit 42 includes a plurality of paper feed cassettes 421 in which the recording sheets of different sizes or orientations are respectively placed, and a feed roller 422 that delivers the recording sheets one by one from the paper feed cassette 421 to the sheet transport path 43. The paper feed cassettes 421 each serve as a sheet storage region.

The feed roller 422, the transport roller 44, and the discharge roller 45 constitute a transport unit 400. The recording sheet is transported by the transport unit 400. The recording sheet delivered to the sheet transport path 43 by the feed roller 422 is transported to the image forming unit 7 by the transport roller 44.

Then the recording sheet that has undergone the recording operation of the image forming unit 7 is discharged to the stack tray 5 by the discharge roller 45.

The operation panel 6 includes a display unit 60, a touch panel 61 for inputting instructions, and a button pad 62 (input unit).

The display unit 60 may be, for example, a flat display panel such as a liquid crystal display (LCD), an organic electro-luminescence display (OEL), or a field emission display (FED), a projector, or a status display LED.

The display unit 60 displays, in addition to various operation screens, downscaled preview images scanned and stored in a storage unit 9 (see Fig. 2). The display unit 60 also displays various settings for outputting materials.

The touch panel 61 is, for example, of a resistive film type or a static capacitance type, and detects a press of a user or the coordinates of the position on the display unit pressed by the user.

The touch panel 61 designed for multiple touches is capable of detecting a plurality of coordinates or pressed positions. In the case where the touch panel 61 is of a static capacitance type, the touch panel 61 can detect the coordinates when the finger of the user comes close to the touch panel 61 within a predetermined range, though the touch panel 61 is not directly pressed.

The button pad 62 includes a start key and a ten-key, and is used for switching operation modes such as copying or scanning, and for inputting instructions related to printing, transmitting, and receiving of a selected document. The button pad 62 may also be configured as a static capacitance type so as to detect the finger of the user within a predetermined range.

The touch panel 61 and the button pad 62 of the operation panel 6 serves as a user instruction acquisition unit that acquires the instruction from the user to the image forming apparatus 1. To be more detailed, the user who distributes the source document among participants monitors the preview image and inputs an instruction such as a print setting, by operating the touch panel 61 and the button pad 62. The distributor can also input, by operating the touch panel 61 and the button pad 62, permission setting of the print setting specifying whether color printing, monochrome printing, or aggregate printing such as 2-in-1 or 4-in-1 is to be performed when the image is outputted.

The image forming unit 7 includes a photoconductor drum 71, an exposure unit 72, a developing unit 73, a transfer unit 74, and a fixing unit 75.

The exposure unit 72 is an optical unit including a laser beam unit, an LED array, a mirror, and a lens, and outputs a light based on the image data onto the photoconductor drum 71, thereby forming a static latent image on the surface thereof.

The developing unit 73 develops with a toner the static latent image formed on the photoconductor drum 71, and forms a toner image based on the static latent image, on the photoconductor drum 71. The transfer unit 74 transfers the toner image formed on the photoconductor drum 71 by the developing unit 73 onto the recording sheet. The fixing unit 75 heats the recording sheet carrying the toner image transferred thereto by the transfer unit 74, thereby fixing the toner image on the recording sheet.

Here, the document feeding unit 3 includes a document sensor that detects the size and number of sheets of the source documents placed on the document loading region 31. The document feeding unit 3 also includes a position sensor for detecting an open and closed position of the platen cover.

The main unit 4 also includes a sensor for detecting an open and closed position of a non-illustrated manual feeding tray, and detecting replacement of the paper feed cassette 421 as setting of the recording sheets. Further, the constituents each include a sensor for detecting changes of related states.

The control unit 8 is configured to execute various jobs including the scanning in a normal operation mode, according to the detection results of those sensors and the instructions of the user inputted through the operation panel 6.

Fig. 2 is a block diagram showing a general configuration of the image forming apparatus 1. The document reading unit 2, the document feeding unit 3, the transport unit 400 (feed roller 422, transport roller 44, discharge roller 45), the operation panel 6, and the image forming unit 7 are connected to the control unit 8 to be controlled thereby. In addition, a storage unit 9 and an image processing unit 10 are connected to the control unit 8.

The control unit 8 is an information processor such as a microcomputer including a read only memory (ROM) and a random access memory (RAM). The ROM contains an image forming program for controlling the operation of the image forming apparatus 1.

The control unit 8 reads out the image forming program stored in the ROM and the storage unit 9 and causes the RAM to activate the image forming program, thereby executing overall control of the image forming apparatus 1 according to instructions and information inputted by the user through the operation panel 6. The control unit 8 and the image processing unit 10 are also capable to executing various control operations according to an instruction from a non-illustrated external terminal.

In addition, the control unit 8 reads out the image forming program stored in the ROM and the storage unit 9 and causes the RAM to activate the image forming program, thereby serving as a distribution output control unit 81.

The distribution output control unit 81 includes a page setting information acquisition unit 811, a print setting decision unit 812, a print setting unit 813, a user designation unit 814, a group registration unit 815, a user print setting memory control unit 816, an image formation control unit 817, and a name information adding unit 818.

The distribution output control unit 81 causes the document reading unit 2 to read the source document, for example upon receipt of a copying instruction inputted by the user who distributes the source document (hereinafter, distributor) through the operation panel 6. The distribution output control unit 81 then stores the image of the source document that has been read in the storage unit 9, as print data 95.

The distribution output control unit 81 displays the preview of each page of the print data 95. The page setting information acquisition unit 811 of the distribution output control unit 81 then acquires information indicating whether the user print setting specified by the distributor is permissible. The information indicating whether the user print setting is permissible is stored by the page setting information acquisition unit 811 in the storage unit 9, as page setting information 94.

The print setting decision unit 812 of the distribution output control unit 81 compares between the page setting information 94 and the user print setting in an account setting 90 of a user to whom the recording sheet having the image outputted thereon is distributed (hereinafter, recipient), and applies a print setting made up by combining the intention of the distributor and the intention of the recipient. The group registration unit 815 of the distribution output control unit 81 is configured to register a group setting 91 of the recipient in the storage unit 9.

Detailed functions of the distribution output control unit 81, the page setting information acquisition unit 811, the print setting decision unit 812, the print setting unit 813, the user designation unit 814, the group registration unit 815, the user print setting memory control unit 816, the image formation control unit 817, and the name information adding unit 818 will be subsequently described.

The storage unit 9 is constituted of a semiconductor memory, a hard disk drive (HDD), or the like. The storage unit 9 stores therein the data of scanned images read by the document reading unit 2 and processed by the image processing unit 10, as print data 95. The storage unit 9 is configured to also store files and thumbnail images read out from an external storage medium, as print data 95.

The storage unit 9 includes storage folders of each user. The storage folders contain the print data 95 formatted in TIFF or PDF, and other types of image data and print data, in the form of a network attached storage (NAS). Alternatively, such data may be transmitted to an external terminal though a network.

The storage unit 9 also serves as a user print setting storage unit that stores therein the account setting 90. The storage unit 9 also serves as a group setting storage unit that stores therein the group setting 91. Further, the storage unit 9 serves as a page setting information storage unit that stores therein the page setting information 94 indicating whether the user print setting is permissible with respect to each page. In addition, the storage unit 9 serves as a print data storage unit that stores therein the print data 95.

The account setting 90 is a database containing various types of information of the image forming apparatus 1 with respect to each user account. The account setting 90 includes, for example, encrypted authentication information, the user print setting, and a default page setting, with respect to each user ID.

The authentication information contains a password, the user name, and authority information associated with the user ID. The authentication information is referred to in a process of user authentication (personal authentication). The authority information includes the authority of the distributor, the recipients, a manager, general users, and a guest, to be referred to for performing a printing or copying job.

The user print setting (default print setting of each user) is the setting information indicating the default print setting of the distributor and each of the recipients. The user print setting may include one or a plurality of print settings including duplex printing, monochromization of a colored source document, printing two pages on a single page (2-in-1), and printing four pages on a single page (4-in-1). The user print setting in the account setting 90 is stored in advance in the storage unit 9, under the control of the user print setting memory control unit 816.

The default page setting is the setting information indicating the default page setting to be applied to each page of the print data 95 by a person assigned as the distributor.

Further, the account setting 90 may include the name and address of the storage folders, the IP address, mail address, and an address book of the users.

The information of each of the users in the account setting 90 is inputted or modified by the distribution output control unit 81 according to the instruction of the user acquired through the operation panel 6. In this case, the registered user can be confirmed on the operation panel 6.

Here, the information for the account setting 90 may be inputted and registered from a separate recording medium connected to a non-illustrated external terminal or a terminal of an external recording medium. In addition, the user may log in in the image forming apparatus 1 from a separate terminal to specify the account setting 90. The account setting 90 may include registration of a guest user.

The group setting 91 includes groups of the recipients. The group setting 91 may include a plurality of settings with respect to each user ID of the distributor. Further, the name of the group to which the meeting material is to be distributed, the default print setting of each group, and a print reservation time may be specified in the group setting 91.

The user designation unit 814 of the distribution output control unit 81 accepts designation of the user inputted through the operation panel 6. The group registration unit 815 of the distribution output control unit 81 registers the user accepted by the user designation unit 814 in a group, to thereby input or modify the group setting 91.

The page setting information 94 (print setting of each page) indicates which types of the print setting is permitted, with respect to each page of the source document. The page setting information 94 includes the information indicating whether outputting of the data under the print settings such as duplex printing, monochromization, and 2-in-1 or 4-in-1 format is permitted or prohibited, with respect to each page of the print data 95.

The page setting information 94 is inputted or modified by the distribution output control unit 81, for example according to the instruction of the user acquired through the operation panel 6, when the copying, scanning, or remote scanning is performed.

Further, the page setting information 94 may optically recognize a barcode or a symbol marked on a page of the source document, with the image processing unit 10. Alternatively, the distributor may input the instruction corresponding to the page setting information 94 from an external terminal, so that the image forming apparatus 1 may acquire the setting information.

The print data 95 contains the image data mainly read by the document reading unit 2 and processed by the image processing unit 10, and acquired with respect to each page. The print data 95 may include files of bit map images in RGB colors, monochrome, or gray scale, and files lightly compressed by run-length encoding or LZW. The print data 95 may also include data formatted into a PDF or a TIFF file. Further, the print data 95 may include the files stored in the storage folders of the storage unit 9, files acquired from an external recording medium, printing files such as PDL transmitted from another terminal, or files received via facsimile communication. The print data 95 may also include individually specified print setting data.

The image processing unit 10 is an arithmetic controlling device constituted of a digital signal processor (DSP) or a graphics processing unit (GPU). The image processing unit 10 serves to perform predetermined processings on the image data, such as scaling up or scaling down, and image upgrading including density adjustment and gradation adjustment.

The image processing unit 10 processes the image data read by the document reading unit 2 so as to form scanned image data, and stores the scanned image data in the storage unit 9 as print data 95. The image processing unit 10 may also perform format conversion to PDF or TIFF, embedding of digital watermark, and decoding operation.

In the image forming apparatus 1, the control unit 8 and the image processing unit 10 may be constituted as an integral device such as a CPU with a built-in GPU or a chip-on-module package.

The image forming apparatus 1 may also include a facsimile transmission/reception unit and a network communication unit for connection to a network.

Further, the image forming apparatus 1 may include an upload unit for uploading an image on another image forming apparatus or a non-illustrated external server. Distribution Material Outputting Process

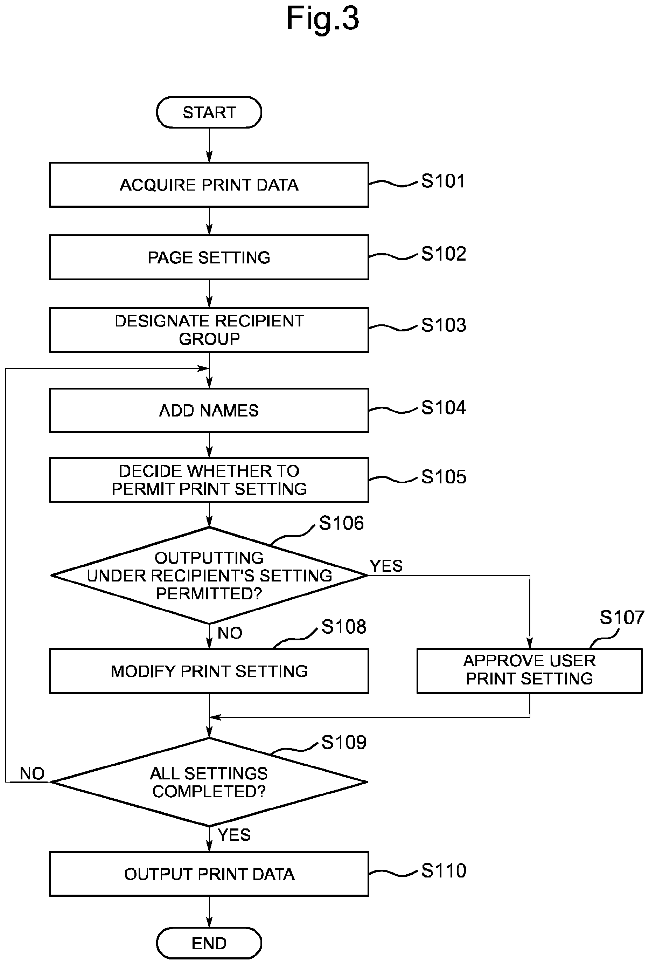

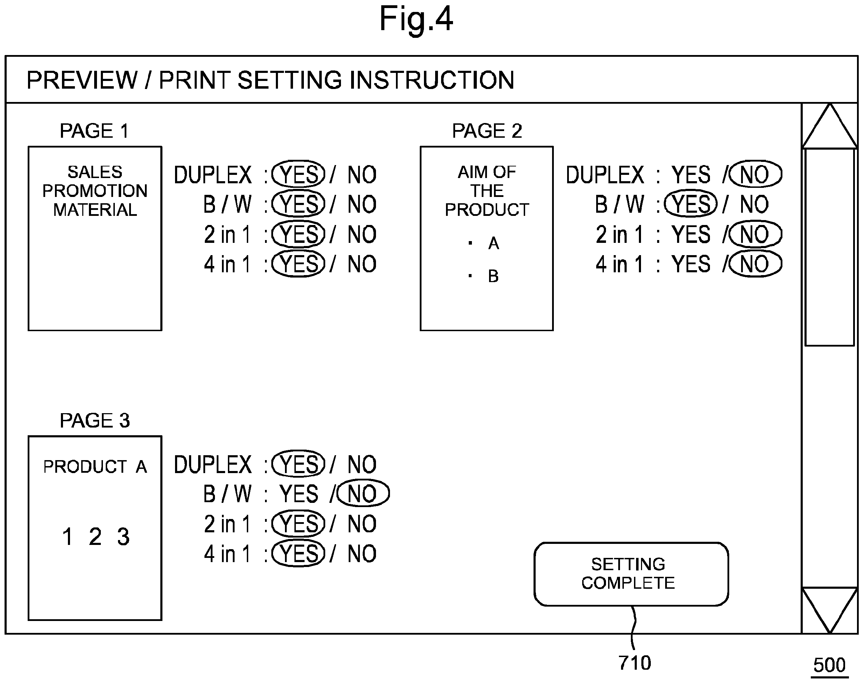

Referring now to Figs. 3 and 4, description will be given about a distribution material outputting process performed by the image forming apparatus 1 according to this embodiment.

Referring to the flowchart shown in Fig. 3, the distribution material outputting process will be sequentially described. The following process is mainly performed by the distribution output control unit 81 of the control unit 8 according to the program stored in the storage unit 9, utilizing hardware resources.

First, the distribution output control unit 81 acquires the print data (step S101).

The distributor places the source document such as a meeting material on the document feeder or contact glass in the document loading region 31 of the image forming apparatus 1.

The distribution output control unit 81 causes the document reading unit 2 to optically read the source document placed as above, upon receipt of an instruction of the distributor inputted through the touch panel 61 and the button pad 62 of the operation panel 6. At this point, the distribution output control unit 81 may perform the user authentication by means of the operation panel 6.

The image data read by the document reading unit 2 is processed by the image processing unit 10 and stored in the storage unit 9 as print data 95. At this point, the distribution output control unit 81 applies the user print setting of the distributor included in the account setting 90, to the print data 95. In addition, the distribution output control unit 81 applies the default page setting to each page of the print data 95.

Here, the distribution output control unit 81 may store the print data 95 in the storage folder in the storage unit 9. In the case where the print data 95 is, for example, PDL data transmitted from another terminal, the print data 95 may include an individual print setting.

Then the distribution output control unit 81 performs the page setting (step S102).

The page setting information acquisition unit 811 of the distribution output control unit 81 displays the preview image of each page of the print data 95, and acquires the page setting of the distributor.

Referring here to Fig. 4, the page setting information acquisition unit 811 causes the display unit 60 of the operation panel 6 to display a screen 500 as illustrated. The distributor selects the page for which the setting is to be specified, and specifies YES or NO through the operation panel 6 with respect to each of the items of the print setting to be applied to that page. The distributor can individually specify whether to permit each of the items of the print setting such as duplex printing, monochromization, and 2-in-1 or 4-in-1 format, as page setting. When the distributor does not input a specific setting, the default page setting of the recipient included in the account setting 90 is applied with priority. The page setting information acquisition unit 811 acquires the instruction of the distributor given through the touch panel 61 and the button pad 62, and reflects the instruction on the display unit 60. In the example shown in Fig. 4, the page setting information acquisition unit 811 switches between "YES" indicating the permission of the setting and "NO" indicating the rejection of the setting, according to the touch of the distributor on the right of each page on the screen 500.

When the distributor presses a button of "setting complete" 710, the page setting information acquisition unit 811 acquires the page setting made by the distributor with respect to each page, and stores such setting in the storage unit 95, as page setting information 94.

The screen 500 may also include a clear button for applying the default print setting to each of the pages.

The distribution output control unit 81 then designates the recipient group (step S103).

The user designation unit 814 of the distribution output control unit 81 reads out the account setting 90 and causes the display unit 60 of the operation panel 6 to display the user names. The distributor designates one or more users as recipients who are to receive the outputted recording sheet, through the touch panel 61 and the button pad 62.

The group registration unit 815 of the distribution output control unit 81 reads out the group setting 91 and designates the recipient group. The group registration unit 815 may also register the users designated as recipient in the group setting 91 and store those recipients in the storage unit 9, according to the instruction of the distributor. Such an arrangement reduces the trouble of designating the recipients who regularly participate in the same meeting.

The distribution output control unit 81 adds the name of the recipient (step S104).

The name information adding unit 818 of the distribution output control unit 81 selects the designated recipient, for example in the order of the ID, and reads out the account setting 90 of the selected recipient.

Then the name information adding unit 818 adds the name of the user to a margin of the first page in the print data for the recipient to be outputted by the image forming unit 7. Such an arrangement facilitates the recipient of the material to be easily identified when the material is distributed among the recipients.

Here, the name information adding unit 818 may add the name of the recipient to all the pages of the print data.

Then the distribution output control unit 81 decides whether to permit the print setting (step S105).

The print setting decision unit 812 of the distribution output control unit 81 compares between the user print setting of the selected recipient and the page setting information 94.

In the case where the group registered by the group registration unit 815 according to the instruction of the distributor is designated, the print setting decision unit 812 may compare between the page setting information 94 and the user print setting corresponding to the user in the designated group, among the plurality of user print settings in the account setting 90 stored in the storage unit 9.

At this step, the print setting decision unit 812 compares between the user print setting of the selected recipient and the page setting with respect to each page, and decides whether each item of the user print setting of the recipient is permissible. More specifically, the print setting decision unit 812 decides whether each of duplex printing, monochromization, 2-in-1, and 4-in-1 is permissible, with respect to each page.

For example, when the user print setting read out from the account setting 90 of the recipient indicates 2-in-1 and monochromization, the print setting decision unit 812 decides whether the page setting according to the page setting information 94 permits 2-in-1 and monochromization with respect to the corresponding page.

The print setting unit 813 of the distribution output control unit 81 then decides whether the user print setting of the recipient compared at the step S105 is permitted according to the page setting (step S106). At this step, the print setting unit 813 decides as Yes in Fig. 3 in the case where the user print setting is permitted according to the page setting information 94 with respect to all the pages. Otherwise, namely in the case where the user print setting of any of the pages is not permissible, the print setting unit 813 decides as No in Fig. 3.

In the case of Yes, the print setting unit 813 proceeds to a step S107. In the case of No, the print setting unit 813 proceeds to a step S108.

In the case where the user print setting of the recipient is permitted according to the page setting with respect to all the pages, the print setting unit 813 approves the user print setting (step S107).

The print setting unit 813 reads out the user print setting included in the account setting 90 of the selected recipient.

Then the print setting unit 813 applies the default print setting of the selected recipient to each page to be outputted to the same recipient. Thereafter, the print setting unit 813 proceeds to a step S109.

In the case where the user print setting of any of the pages is not permissible under the page setting specified by the distributor, the print setting unit 813 modifies the print setting (step S108).

The print setting unit 813 modifies the print setting so as to agree with the page setting specified by the distributor, with respect to the page not permissible under the page setting information 94. In other words, the print setting unit 813 modifies the print setting of the recipient when the print setting proves to be different, through the comparison, from page setting intentionally specified by the distributor.

For example, when the page setting of the distributor specifies NO for duplex printing, 2-in-1, and 4-in-1 for a given page and the user print setting of the selected recipient indicates 2-in-1 and monochromization for the same page, the print setting unit 813 modifies the print setting so as not to output the page in the 2-in-1 format. In other words, the corresponding page of the material to be distributed to the relevant recipient is outputted in black and white (B/W) according to the user print setting, but in the 1-to-1 format, i.e., a single page of the material is printed on a single recording sheet. Further, for example when the user print setting of another recipient indicates 4-in-1, the print setting unit 813 maintains the print setting for color printing, but modifies the print setting to the 1-to-1 format.

As above, the print setting unit 813 modifies the print setting of the recipient by giving priority to the setting specified by the distributor with respect to a given page, and maintains the print setting of the individual recipient as far as that print setting is applicable.

Here, automatic color selection (ACS) may be adopted, for outputting a page in B/W when the page is without color elements, irrespective of whether monochromization is selected.

Then the distribution output control unit 81 decides whether the print setting for all the pages in the print data 95 has been completed for all the recipients (step S109). The distribution output control unit 81 decides as Yes in the case where the setting has been completed for all the pages and all the recipients. Otherwise, the distribution output control unit 81 decides as No.

In the case of Yes, the distribution output control unit 81 proceeds to a step S110. In the case of No, the distribution output control unit 81 returns to the step S104 and selects a next recipient.
in the case where the print setting has been completed for all the pages and all the recipients, the image formation control unit 817 of the distribution output control unit 81 outputs the print data 95 (step S110).

After the print setting is made for all the pages with respect to all the recipients, the image formation control unit 817 outputs the print data 95 for the respective recipients. The image formation control unit 817 causes the image forming unit 7 to print the print data 95. The distribution output control unit 81 causes the image forming unit 7 to perform duplex printing when the print setting indicates duplex printing, and aggregates two pages in a recording sheet when 2-in-1 is specified and four pages when 4-in-1 is specified, to cause the image forming unit 7 to print the pages as specified. For a page to be printed in B/W, the image formation control unit 817 converts the color image into a B/W image by giving predetermined weights to the CMYK colors, for the image forming unit 7. In the case where a page to be printed in B/W and a page to be printed in colors are included in the same recording sheet in the aggregate printing such as 2-in-1 or 4-in-1, only the region corresponding to the page for B/W printing is monochromized.

After the printing is performed, the image formation control unit 817 may delete the print data 95 in the storage unit 9.

In addition to outputting the print data 95 to the image forming unit 7 for printing, the image formation control unit 817 may create a PDF file, transmit the print data 95 through the facsimile transmission/reception unit, transmit the print data 95 to another terminal, or upload the print data 95 to a server.

Further, the image formation control unit 817 may count the outputs of color images and B/W images and store the result in the storage unit 9 as history information, to calculate the charge (fee).

Further, the group registration unit 815 may cause the display unit 60 of the operation panel 6 to display a dialog box or the like after the print data 95 is outputted, to generate a new group of the recipients. In this case, the user print setting memory control unit 816 may modify, by an instruction from the distributor, the user print setting of individual recipients.

The distribution material outputting process is thus completed.

Now, many of the existing image forming apparatuses are capable of performing the printing under a customized setting made by each user, according to the setting information of the corresponding user. In this case, however, the printing is performed under the customized setting of each user, and hence the printed result may become different from the intention of the distributor. For example, although the distributor highlights an important point in a page of the material in red color, that page is printed in B/W if the print setting of each user is specified as monochromization. Therefore, although the material includes some parts highlighted in red by the distributor to attract the attention of the participants, the recipients who have received the material outputted in B/W are unable to recognize the highlighted parts.

Likewise, in the case where a page including a detailed drawing in the material is printed in an aggregate format, the drawing becomes difficult to read and the recipients are disabled from fully understanding the drawing.

The image forming apparatus 1 configured as above is advantageous for minimizing the foregoing drawbacks, because of being capable of outputting the print data of a meeting material that reflects the intention of both the distributor and the recipients.

Specifically, the image forming apparatus 1 according to this embodiment includes the storage unit 9, the page setting information acquisition unit 811, the print setting decision unit 812, the print setting unit 813, and the image forming unit 7. The storage unit 9 stores therein the print setting made by each user, as user print setting. The page setting information acquisition unit 811 acquires the page setting information indicating whether the user print setting is permissible, with respect to each page of print data. The print setting decision unit 812 decides, with respect to each page, whether the user print setting stored in the storage unit 9 is permitted according to the page setting information acquired by the page setting information acquisition unit 811. The print setting unit 813 applies the user print setting to the page for which the user print setting is permitted according to the page setting information 94, and applies a print setting of the print data to the page for which the user print setting is not permitted, among the pages with respect to which the decision on the user print setting has been made by the print setting decision unit 812. The image forming unit 7 outputs the print data for each user according to the print setting applied by the print setting unit 813.

The mentioned configuration enables the intention of both the distributor of a meeting material such as the chief of the meeting, and the recipients of the material such as the participants of the meeting, to be reflected in the print data to be outputted. Therefore, the image forming apparatus 1 contributes to reducing the consumption of the recording sheets and the toner, and also prevents degradation of productivity of the distributor and the recipients in the meeting.

In other words, the image forming apparatus 1 according to the disclosure can reduce the consumption of the recording sheets and the toner in the case of outputting the same source document such as a meeting material and distributing the material to the participants, in both aspects of the intention of the distributor and the user setting by the recipients. Therefore, the meeting material can be outputted in an optimum manner.

The image forming apparatus 1 according to the disclosure accepts the print setting made by each of the recipients, instead of causing the user to simply modify the print setting of each page for each single outputting job. Such a configuration eliminates the need to modify the print setting of the page to be modified and individually output the print data, for each of the recipients.

Further, the image forming apparatus 1 according to the disclosure includes the user designation unit 814 that accepts designation of a plurality of users, and the group registration unit 815 that registers the user accepted by the user designation unit 814 in a group. The print setting decision unit 812 decides whether the user print setting corresponding to the user in the group whose designation has been accepted, among a plurality of user print settings stored in the storage unit 9, is permitted according to the page setting information acquired by the page setting information acquisition unit 811, with respect to each page.

Such an arrangement facilitates the distributor, for example in the case where the same members regularly participate in the meeting, to designate the recipients and output the meeting material that reflects the intention of both the distributor and the recipients.

Further, the image forming apparatus 1 according to the disclosure also includes the name information adding unit 818 that adds the name of the user to the print data outputted by the image forming unit 7, with respect to each user. Therefore, the recipient of the material can be easily identified when the material is distributed among the recipients.

In the distribution material outputting process according to the foregoing embodiment, the print setting unit 813 selects the recipient and adopts the print setting according to the account setting 90 of the relevant recipient, with respect to each page. Alternatively, the print setting unit 813 may cause the recipient to designate the default print setting, or acquire the default print setting of each group, when outputting the print data.

In addition, the print setting unit 813 may also be configured to adopt the same print setting for all the recipients with respect to a page specified by the distributor, or to designate the page setting of the distributor as the default print setting of each group.

The method of inputting the image data according to the foregoing embodiment is merely exemplary and in no way intended for limiting the scope of the disclosure.

For example, the image forming apparatus 1 according to the embodiment may perform the same process with respect to a printing job instructed by a non-illustrated external terminal connected via a network. In this case, the distribution output control unit 81 may acquire the data of the printing job or a facsimile transmission/reception job, and analyze and rasterize the page description language of the print data, to thereby generate data similar to the print data 95 and store such data in the storage unit 9. The same outputting process as described above can be performed with respect to the print data thus generated.

The disclosure is also applicable to various information processing apparatuses other than the image forming apparatus. The image forming apparatus 1 according to the embodiment may be configured to accept print data generated by another image forming apparatus, an additionally connected scanner, or a network scanner. The image forming apparatus 1 may also perform the operation according to this embodiment, for scanning an image or converting data to a PDF file, in addition to the printing job.

Still further, the image forming program according to the foregoing embodiment may be recorded on a computer-readable non-transitory recording medium, such as a hard disk, a CD-ROM, a DVD-ROM, and a semiconductor memory.

The configuration and operations according to the foregoing embodiment are merely exemplary, and may be modified as desired within the scope of the claims.

## Claims

1. An image forming apparatus (1) configured to output print data (95) according to a print setting, the image forming apparatus (1) comprising:
a user print setting storage unit (9) that stores therein the print setting made by each of one or more users, as a user print setting;
a page setting information acquisition unit (811) that, prior to output the print data (95), causes a display unit (60) to display a predetermined screen and acquires, with respect to each of one or more pages of the print data (95), page setting information (94) indicating whether to permit each print setting of duplex printing, monochromization, 2-in-1, and 4-in-1, according to an instruction entered through the screen;
a user designation unit (814) that accepts designation of one or more users who are to receive the output of the print data (95), the designation being inputted through an operation panel (6);
a print setting decision unit (812) that reads from the user print setting storage unit (9) the user print setting of the user accepted by the user designation unit (814), compares the read user print setting to the page setting information (94) acquired by the page setting information acquisition unit (811), and decides, with respect to each of the one or more pages, whether the read user print setting is permitted according to the page setting information (94);
a print setting unit (813) that (A) when it is decided by the print setting decision unit (812) that the user print setting is permitted with respect to all the pages of the print data (95), applies the user print setting to each page of the print data (95), and that, (B) when it is decided by the print setting decision unit (812) that there is, in the print data (95), any page with respect to which the user print setting is not permitted, applies the user print setting to the page for which the user print setting is permitted according to the page setting information (94), and with respect to the page for which the user print setting is not permitted according to the page setting information (94), applies the user print setting to the print setting for which the user print setting is permitted and modifies the print setting for which the user print setting is not permitted so as to agree with the page setting information (94); and
an image forming unit (7) that outputs the print data (95) for each of the one or more users according to the print setting applied by the print setting unit (813).

2. The image forming apparatus (1) according to claim 1, further comprising:
a group registration unit (815) that registers a plurality of the user accepted by the user designation unit (814) in a group,
wherein the print setting decision unit (812) decides whether the user print setting corresponding to the user in the group whose designation has been accepted, among a plurality of user print settings stored in the user print setting storage unit (9), is permitted according to the page setting information (94) acquired by the page setting information acquisition unit (811), with respect to each of one or more pages.

3. The image forming apparatus (1) according to claim 1, further comprising a name information adding unit (818) that adds a name of the user to the print data (95) outputted by the image forming unit (7), with respect to each of one or more users.

4. An image forming method of outputting print data (95) according to a print setting, the image forming method comprising:
storing a user print setting including storing the print setting made by each of one or more users in a user print setting storage unit (9), as a user print setting;
acquiring page setting information (S101) including, prior to output the print data (95), causing a display unit (60) to display a predetermined screen and acquiring, with respect to each of one or more pages of the print data (95), page setting information (94) indicating whether to permit each print setting of duplex printing, monochromization, 2-in-1, and 4-in-1, according to an instruction entered through the screen;
designating (S103) including accepting designation of one or more users who are to receive the output of the print data (95), the designation being inputted through an operation panel;
deciding permission of the print setting (S105) including reading from the user print setting storage unit (9) the user print setting of the user accepted in the designating (S103), comparing the read user print setting to the page setting information (94) acquired by the acquiring page setting information (S101), and deciding, with respect to each of the one or more pages, whether the read user print setting is permitted according to the page setting information (94);
print setting (S106, S107, S108) including (A) when it is decided in the deciding permission of the print setting (S105) that the user print setting is permitted with respect to all the pages of the print data (95), applying the user print settings to each page of the print data (95), and that, (B) when it is decided in the deciding permission of the print setting (S105) that there is, in the print data (95), any page with respect to which the user print setting is not permitted, applying the user print setting to the page for which the user print setting is permitted according to the page setting information (94), and with respect to the page for which the user print setting is not permitted according to the page setting information (94), applying the user print setting to the print setting for which the user print setting is permitted and modifying the print setting for which the user print setting is not permitted so as to agree with the page setting information (94); and
forming an image (S110) including causing an image forming unit to output the print data (95) for each of the one or more users according to the print setting applied.

5. An image forming program for causing a computer to perform as:
a user print setting memory control unit (816) that stores a print setting made by each of one or more users in a user print setting storage unit (9), as a user print setting;
a page setting information acquisition unit (811) that, prior to output of print data (95), causes a display unit (60) to display a predetermined screen and acquires, with respect to each of one or more pages of print data (95), page setting information (94) indicating whether to permit each print setting of duplex printing, monochromization, 2-in-1, and 4-in-1, according to an instruction entered through the screen;
a user designation unit (814) that accepts designation of one or more users who are to receive the output of the print data (95), the designation being inputted through an operation panel;
a print setting decision unit (812) that reads from the user print setting storage unit (9) the user print setting of the user accepted by the user designation unit (814), compares the read user print setting to the page setting information (94) acquired by the page setting information acquisition unit (811), and decides, with respect to each of the one or more pages, whether the read user print setting is permitted according to the page setting information (94);
a print setting unit (813) that (A) when it is decided by the print setting decision unit (812) that the user print setting is permitted with respect to all the pages of the print data (95), applies the user print settings to each page of the print data (95) respectively, and that, (B) when it is decided by the print setting decision unit (812) that there is, in the print data (95), any page with respect to which the user print setting is not permitted, applies the user print setting to the page for which the user print setting is permitted according to the page setting information (94), and with respect to the page for which the user print setting is not permitted according to the page setting information (94), applies the user print setting to the print setting for which the user print setting is permitted and modifies the print setting for which the user print setting is not permitted so as to agree with the page setting information (94); and
an image formation control unit (817) that causes an image forming unit (7) to output the print data (95) for each of the one or more users according to the print setting applied by the print setting unit (813).

## Patentansprüche

1. Bildgebungseinrichtung (1), die konfiguriert ist, Druckdaten (95) gemäß einer Druckeinstellung auszugeben, wobei die Bildgebungseinrichtung (1) umfasst:
eine Anwenderdruckeinstellungsspeichereinheit (9), die die Druckeinstellung, die von jedem eines oder mehrerer Anwender vorgenommen werden, als eine Anwenderdruckeinstellung darin speichert;
eine Seiteneinstellungsinformationsbeschaffungseinheit (811), die vor Ausgabe der Druckdaten (95) eine Anzeigeeinheit (60) veranlasst, einen vorgegebenen Bildschirm anzuzeigen und in Bezug auf jede einer oder mehrerer Seiten der Druckdaten (95) Seiteneinstellungsinformationen (94) beschafft, die anzeigen, ob jede Druckeinstellung von Duplexdruck, Monochromatisierung, 2-in-1 und 4-in-1 zuzulassen ist, gemäß einer Anweisung, die durch den Bildschirm eingegeben wurde;
eine Anwenderzuweisungseinheit (814), die Zuweisung eines oder mehrerer Anwender annimmt, die den Ausgang der Druckdaten (95) empfangen sollen, wobei die Zuweisung durch ein Betriebspaneel (6) eingegeben wird;
eine Druckeinstellungsentscheidungseinheit (812), die aus der Anwenderdruckeinstellungsspeichereinheit (9) die Anwenderdruckeinstellung des Anwenders liest, die von der Anwenderzuweisungseinheit (814) angenommen wurde, die ausgelesene Anwenderdruckeinstellung mit den Seiteneinstellungsinformationen (94) vergleicht, die von der Seiteneinstellungsinformationsbeschaffungseinheit (811) beschafft wurden, und in Bezug auf jede der einen oder mehreren Seiten entscheidet, ob die ausgelesene Anwenderdruckeinstellung gemäß den Seiteneinstellungsinformationen (94) zulässig ist;
eine Druckeinstellungseinheit (813), die (A) wenn von der Druckeinstellungsentscheidungseinheit (812) entschieden wird, dass die Anwenderdruckeinstellung in Bezug auf all die Seiten der Druckdaten (95) zulässig ist, die Anwenderdruckeinstellung auf jede Seite der Druckdaten (95) anwendet, und die (B) wenn von der Druckeinstellungsentscheidungseinheit (812) entschieden wird, dass eine beliebige Seite in den Druckdaten (95) ist, in deren Bezug die Anwenderdruckeinstellung nicht zulässig ist, die Anwenderdruckeinstellung auf die Seite anwendet, für die die Anwenderdruckeinstellung gemäß den Seiteneinstellungsinformationen (94) zulässig ist, und in Bezug auf die Seite, für die die Anwenderdruckeinstellung gemäß den Seiteneinstellungsinformationen (94) nicht zulässig ist, die Anwenderdruckeinstellung auf die Druckeinstellung anwendet, für die die Anwenderdruckeinstellung zulässig ist, und die Druckeinstellung modifiziert, für die die Anwenderdruckeinstellung nicht zulässig ist, um den Seiteneinstellungsinformationen (94) zu entsprechen; und
eine Bildgebungseinheit (7), die die Druckdaten (95) für jeden des einen oder der mehreren Anwender gemäß der Druckeinstellung ausgibt, die von der Druckeinstellungseinheit (813) angewendet wird.

2. Bildgebungseinrichtung (1) nach Anspruch 1, weiter umfassend:
eine Gruppenregistrierungseinheit (815), die eine Vielzahl der von der Anwenderzuweisungseinheit (814) angenommenen Anwender in einer Gruppe registriert,
wobei die Druckeinstellungsentscheidungseinheit (812) entscheidet, ob die Anwenderdruckeinstellung, die dem Anwender in der Gruppe entspricht, dessen Zuweisung angenommen wurde, unter einer Vielzahl von Anwenderdruckeinstellungen, die in der Anwenderdruckeinstellungsspeichereinheit (9) gespeichert sind, gemäß den Seiteneinstellungsinformationen (94), die von der Seiteneinstellungsinformationsbeschaffungseinheit (811) beschafft werden, in Bezug auf jede einer oder mehrerer Seiten zulässig ist.

3. Bildgebungseinrichtung (1) nach Anspruch 1, weiter umfassend eine Nameninformationshinzufügungseinheit (818), die einen Namen des Anwenders zu den Druckdaten (95), die von der Bildgebungseinheit (7) ausgegeben werden, in Bezug auf jeden eines oder mehrerer Anwender hinzufügt.

4. Bildgebungsverfahren zum Ausgeben von Druckdaten (95) gemäß einer Druckeinstellung, wobei das Bildgebungsverfahren umfasst:
Speichern einer Anwenderdruckeinstellung, beinhaltend Speichern der Druckeinstellung, die von jedem eines oder mehrerer Anwender vorgenommen werden, in einer Druckeinstellungsspeichereinheit (9) als eine Anwenderdruckeinstellung;
Beschaffen von Seiteneinstellungsinformationen (S101), beinhaltend, vor Ausgabe der Druckdaten (95), Veranlassen einer Anzeigeeinheit (60), einen vorgegebenen Bildschirm anzuzeigen und Beschaffen, in Bezug auf jede einer oder mehrerer Seiten der Druckdaten (95), von Seiteneinstellungsinformationen (94), die anzeigen, ob jede Druckeinstellung von Duplexdruck, Monochromatisierung, 2-in-1 und 4-in-1 zuzulassen ist, gemäß einer Anweisung, die durch den Bildschirm eingegeben wurde;
Zuweisen (S103), beinhaltend Annehmen von Zuweisung eines oder mehrerer Anwender, die den Ausgang der Druckdaten (95) empfangen sollen, wobei die Zuweisung durch ein Betriebspaneel eingegeben wird;
Entscheiden über Zulässigkeit der Druckeinstellung (S105), beinhaltend Lesen der Anwenderdruckeinstellung des Anwenders, der beim Zuweisen (S103) angenommen wurde, aus der Anwenderdruckeinstellungsspeichereinheit (9), Vergleichen der ausgelesenen Anwenderdruckeinstellung mit den Seiteneinstellungsinformationen (94), die vom Beschaffen von Seiteneinstellungsinformationen (S101) beschafft wurden, und Entscheiden, in Bezug auf jede der einen oder mehreren Seiten, ob die ausgelesene Anwenderdruckeinstellung gemäß den Seiteneinstellungsinformationen (94) zulässig ist;
Druckeinstellung (S106, S107, S108), beinhaltend (A) wenn beim Entscheiden über Zulässigkeit der Druckeinstellung (S105) entschieden wird, dass die Anwenderdruckeinstellung in Bezug auf all die Seiten der Druckdaten (95) zulässig ist, Anwenden der Anwenderdruckeinstellung auf jede Seite der Druckdaten (95), und dass (B) wenn beim Entscheiden über Zulässigkeit der Druckeinstellung (S105) entschieden wird, dass eine beliebige Seite in den Druckdaten (95) ist, in deren Bezug die Anwenderdruckeinstellung nicht zulässig ist, Anwenden der Anwenderdruckeinstellung auf die Seite, für die die Anwenderdruckeinstellung gemäß den Seiteneinstellungsinformationen (94) zulässig ist und in Bezug auf die Seite, für die die Anwenderdruckeinstellung gemäß den Seiteneinstellungsinformationen (94) nicht zulässig ist, Anwenden der Anwenderdruckeinstellung auf die Druckeinstellung, für die die Anwenderdruckeinstellung zulässig ist, und Modifizieren der Druckeinstellung, für die die Anwenderdruckeinstellung nicht zulässig ist, um den Seiteneinstellungsinformationen (94) zu entsprechen; und
Formen eines Bilds (S110), beinhaltend Veranlassen einer Bildgebungseinheit, die Druckdaten (95) für jeden des einen oder der mehreren Anwender gemäß der angewendeten Druckeinstellung auszugeben.

5. Bildgebungsprogramm zum Veranlassen eines Computers, zu agieren als:
eine Anwenderdruckeinstellungsspeichersteuerungseinheit (816), die eine Druckeinstellung, die von jedem eines oder mehrerer Anwender vorgenommen wird, in einer Anwenderdruckeinstellungsspeichereinheit (9) als eine Anwenderdruckeinstellung speichert;
eine Seiteneinstellungsinformationsbeschaffungseinheit (811), die vor Ausgabe von Druckdaten (95) eine Anzeigeeinheit (60) veranlasst, einen vorgegebenen Bildschirm anzuzeigen und in Bezug auf jede einer oder mehrerer Seiten der Druckdaten (95) Seiteneinstellungsinformationen (94) beschafft, die anzeigen, ob jede Druckeinstellung von Duplexdruck, Monochromatisierung, 2-in-1 und 4-in-1 zuzulassen ist, gemäß einer Anweisung, die durch den Bildschirm eingegeben wurde;
eine Anwenderzuweisungseinheit (814), die Zuweisung eines oder mehrerer Anwender annimmt, die den Ausgang der Druckdaten (95) empfangen sollen, wobei die Zuweisung durch ein Betriebspaneel eingegeben wird;
eine Druckeinstellungsentscheidungseinheit (812), die aus der Anwenderdruckeinstellungsspeichereinheit (9) die Anwenderdruckeinstellung des Anwenders liest, die von der Anwenderzuweisungseinheit (814) angenommen wurde, die ausgelesene Anwenderdruckeinstellung mit den Seiteneinstellungsinformationen (94) vergleicht, die von der Seiteneinstellungsinformationsbeschaffungseinheit (811) beschafft wurden, und in Bezug auf jede der einen oder mehreren Seiten entscheidet, ob die ausgelesene Anwenderdruckeinstellung gemäß den Seiteneinstellungsinformationen (94) zulässig ist;
eine Druckeinstellungseinheit (813), die (A) wenn von der Druckeinstellungsentscheidungseinheit (812) entschieden wird, dass die Anwenderdruckeinstellung in Bezug auf all die Seiten der Druckdaten (95) zulässig ist, die Anwenderdruckeinstellung auf jede Seite der Druckdaten (95) anwendet, und die (B) wenn von der Druckeinstellungsentscheidungseinheit (812) entschieden wird, dass eine beliebige Seite in den Druckdaten (95) ist, in deren Bezug die Anwenderdruckeinstellung nicht zulässig ist, die Anwenderdruckeinstellung auf die Seite anwendet, für die die Anwenderdruckeinstellung gemäß den Seiteneinstellungsinformationen (94) zulässig ist und in Bezug auf die Seite, für die die Anwenderdruckeinstellung gemäß den Seiteneinstellungsinformationen (94) nicht zulässig ist, die Anwenderdruckeinstellung auf die Druckeinstellung anwendet, für die die Anwenderdruckeinstellung zulässig ist, und die Druckeinstellung modifiziert, für die die Anwenderdruckeinstellung nicht zulässig ist, um den Seiteneinstellungsinformationen (94) zu entsprechen; und
eine Bildgebungssteuerungseinheit (817), die eine Bildgebungseinheit (7) veranlasst, die Druckdaten (95) für jeden des einen oder der mehreren Anwender gemäß der Druckeinstellung auszugeben, die von der Druckeinstellungseinheit (813) angewendet wird.

## Revendications

1. Appareil de formation d'images (1) configuré pour sortir des données d'impression (95) selon un réglage d'impression, l'appareil de formation d'images (1) comprenant :
une unité de stockage de réglages d'impression d'utilisateur (9) qui stocke dans celle-ci le réglage d'impression réalisé par chacun d'un ou plusieurs utilisateurs, en tant que réglage d'impression d'utilisateur ;
une unité d'acquisition d'informations de réglage de page (811) qui, avant que des données d'impression (95) soient délivrées en sortie, amène une unité d'affichage (60) à afficher un écran prédéterminé et acquiert, par rapport à chacune d'une ou plusieurs pages des données d'impression (95), des informations de réglage de page (94) indiquant s'il faut autoriser ou non chaque réglage d'impression parmi impression duplex, monochromisation, 2-en-1 et 4-en-1, selon une instruction entrée par l'intermédiaire de l'écran ;
une unité de désignation d'utilisateur (814) qui accepte une désignation d'un ou plusieurs utilisateurs qui doivent recevoir la sortie des données d'impression (95), la désignation étant entrée par l'intermédiaire d'un panneau d'opération (6) ;
une unité de décision de réglage d'impression (812) qui lit à partir de l'unité de stockage de réglages d'impression d'utilisateur (9) le réglage d'impression d'utilisateur de l'utilisateur accepté par l'unité de désignation d'utilisateur (814), compare le réglage d'impression d'utilisateur lu aux informations de réglage de page (94) acquises par l'unité d'acquisition d'informations de réglage de page (811), et décide, par rapport à chacune des une ou plusieurs pages, si le réglage d'impression d'utilisateur lu est autorisé selon les informations de réglage de page (94) ;
une unité de réglage d'impression (813) qui (A) lorsqu'il est décidé par l'unité de décision de réglage d'impression (812) que le réglage d'impression d'utilisateur est autorisé par rapport à toutes les pages des données d'impression (95), applique le réglage d'impression d'utilisateur à chaque page des données d'impression (95), et qui, (B) lorsqu'il est décidé par l'unité de décision de réglage d'impression (812) qu'il y a, dans les données d'impression (95), une page quelconque par rapport à laquelle le réglage d'impression d'utilisateur n'est pas autorisé, applique le réglage d'impression d'utilisateur à la page pour laquelle le réglage d'impression d'utilisateur est autorisé selon les informations de réglage de page (94), et par rapport à la page pour laquelle le réglage d'impression d'utilisateur n'est pas autorisé selon les informations de réglage de page (94), applique le réglage d'impression d'utilisateur au réglage d'impression pour lequel le réglage d'impression d'utilisateur est autorisé et modifie le réglage d'impression pour lequel le réglage d'impression d'utilisateur n'est pas autorisé de manière à concorder avec les informations de réglage de page (94) ; et
une unité de formation d'images (7) qui délivre en sortie les données d'impression (95) pour chacun des un ou plusieurs utilisateurs selon le réglage d'impression appliqué par l'unité de réglage d'impression (813).

2. Appareil de formation d'images selon la revendication 1, comprenant en outre :
une unité d'enregistrement de groupe (815) qui enregistre une pluralité de l'utilisateur accepté par l'unité de désignation d'utilisateur (814) dans un groupe,
dans lequel l'unité de décision de réglage d'impression (812) décide si le réglage d'impression d'utilisateur correspondant à l'utilisateur dans le groupe dont une désignation a été acceptée, parmi une pluralité de réglages d'impression d'utilisateur stockés dans l'unité de stockage de réglages d'impression d'utilisateur (9), est autorisé selon les informations de réglage de page (94) acquises par l'unité d'acquisition d'informations de réglage de page (811), par rapport à chacune d'une ou plusieurs pages.

3. Appareil de formation d'images (1) selon la revendication 1, comprenant en outre une unité d'ajout d'informations de nom (818) qui ajoute un nom de l'utilisateur aux données d'impression (95) délivrées en sortie par l'unité de formation d'images (7), par rapport à chacun d'un ou plusieurs utilisateurs.

4. Procédé de formation d'images de sortie de données d'impression (95) selon un réglage d'impression, le procédé de formation d'images comprenant les étapes consistant à :
stocker un réglage d'impression d'utilisateur comprenant un stockage du réglage d'impression réalisé par chacun d'un ou plusieurs utilisateurs dans une unité de stockage de réglages d'impression d'utilisateur (9), en tant que réglage d'impression d'utilisateur ;
acquérir des informations de réglage de page (S101) comprenant l'étape consistant à, avant de délivrer en sortie les données d'impression (95), amener une unité d'affichage (60) à afficher un écran prédéterminé et acquérir, par rapport à chacune d'une ou plusieurs pages des données d'impression (95), des informations de réglage de page (94) indiquant s'il faut autoriser ou non chaque réglage d'impression parmi impression duplex, monochromisation, 2-en-1 et 4-en-1, selon une instruction entrée par l'intermédiaire de l'écran ;
désigner (S103), y compris accepter une désignation d'un ou plusieurs utilisateurs qui doivent recevoir la sortie des données d'impression (95), la désignation étant entrée par l'intermédiaire d'un panneau d'opération ;
décider une autorisation du réglage d'impression (S105), y compris lire à partir de l'unité de stockage de réglages d'impression d'utilisateur (9) le réglage d'impression d'utilisateur de l'utilisateur accepté dans la désignation (S103), comparer le réglage d'impression d'utilisateur lu aux informations de réglage de page (94) acquises par l'acquisition des informations de réglage de page (S101), et décider, par rapport à chacune des une ou plusieurs pages, si le réglage d'impression d'utilisateur lu est autorisé selon les informations de réglage de page (94) ;
régler une impression (S106, S107, S108), y compris (A) lorsqu'il est décidé dans l'autorisation de décision du réglage d'impression (S105) que le réglage d'impression d'utilisateur est autorisé par rapport à toutes les pages des données d'impression (95), appliquer les paramètres d'impression d'utilisateur à chaque page des données d'impression (95), et, (B) lorsqu'il est décidé dans l'autorisation de décision du réglage d'impression (S105) qu'il existe, dans les données d'impression (95), une page quelconque par rapport à laquelle le réglage d'impression d'utilisateur n'est pas autorisé, appliquer e réglage d'impression d'utilisateur à la page pour laquelle le réglage d'impression d'utilisateur est autorisé selon les informations de réglage de page (94), et par rapport à la page pour laquelle le réglage d'impression d'utilisateur n'est pas autorisé selon les informations de réglage de page (94), appliquer le réglage d'impression d'utilisateur au réglage d'impression pour lequel le réglage d'impression d'utilisateur est autorisé et modifier le réglage d'impression pour lequel le réglage d'impression d'utilisateur n'est pas autorisé de manière à concorder aux informations de réglage de page(94) ; et
former une image (S110), y compris amener une unité de formation d'images à délivrer en sortie les données d'impression (95) pour chacun des un ou plusieurs utilisateurs selon le réglage d'impression appliqué.

5. Programme de formation d'images pour amener un ordinateur à fonctionner comme:
une unité de commande de mémoire de réglages d'impression d'utilisateur (816) qui stocke un réglage d'impression réalisé par chacun d'un ou plusieurs utilisateurs dans une unité de stockage de réglages d'impression d'utilisateur (9), en tant que réglage d'impression d'utilisateur ;
une unité d'acquisition d'informations de réglage de page (811) qui, avant que des données d'impression (95) soient délivrées en sortie, amène une unité d'affichage (60) à afficher un écran prédéterminé et acquiert, par rapport à chacune d'une ou plusieurs pages de données d'impression (95), des informations de réglage de page (94) indiquant s'il faut autoriser ou non chaque réglage d'impression parmi impression duplex, monochromisation, 2-en-1 et 4-en-1, selon une instruction entrée par l'intermédiaire de l'écran ;
une unité de désignation d'utilisateur (814) qui accepte une désignation d'un ou plusieurs utilisateurs qui doivent recevoir la sortie des données d'impression (95), la désignation étant entrée par l'intermédiaire d'un panneau d'opération ;
une unité de décision de réglage d'impression (812) qui lit à partir de l'unité de stockage de réglages d'impression d'utilisateur (9) le réglage d'impression d'utilisateur de l'utilisateur accepté par l'unité de désignation d'utilisateur (814), compare le réglage d'impression d'utilisateur lu aux informations de réglage de page (94) acquises par l'unité d'acquisition d'informations de réglage de page (811), et décide, pour chacune des une ou plusieurs pages, si le réglage d'impression d'utilisateur lu est autorisé selon les informations de réglage de page (94) ;
une unité de réglage d'impression (813) qui (A) lorsqu'il est décidé par l'unité de décision de réglage d'impression (812) que le réglage d'impression d'utilisateur est autorisé par rapport à toutes les pages des données d'impression (95), applique les réglages d'impression d'utilisateur à chaque page des données d'impression (95), respectivement, et qui, (B) lorsqu'il est décidé par l'unité de décision de réglage d'impression (812) qu'il y a, dans les données d'impression (95), une page quelconque par rapport à laquelle le réglage d'impression d'utilisateur n'est pas autorisé, applique le réglage d'impression d'utilisateur à la page pour laquelle le réglage d'impression d'utilisateur est autorisé selon les informations de réglage de page (94), et par rapport à la page pour laquelle le réglage d'impression d'utilisateur n'est pas autorisé selon les informations de réglage de page (94), applique le réglage d'impression d'utilisateur au réglage d'impression pour lequel le réglage d'impression d'utilisateur est autorisé et modifie le réglage d'impression pour lequel le réglage d'impression d'utilisateur n'est pas autorisé de manière à concorder avec les informations de réglage de page (94) ; et
une unité de commande de formation d'images (817) qui amène une unité de formation d'images (7) à délivrer en sortie les données d'impression (95) pour chacun des un ou plusieurs utilisateurs selon le réglage d'impression appliqué par l'unité de réglage d'impression (813).
